(19) 

Europäisches Patentamt

European Patent Office

Office européen des brevets

(11) **EP 4 683 012 A1**

(12) **EUROPEAN PATENT APPLICATION**
published in accordance with Art. 153(4) EPC

(43) Date of publication:
**21.01.2026 Bulletin 2026/04**

(21) Application number: 23784851.0

(22) Date of filing: **13.02.2023**

(51) International Patent Classification (IPC):
$H01M\ 8/1062^{(2016.01)}$  $H01M\ 8/1058^{(2016.01)}$
$H01M\ 8/106^{(2016.01)}$  $H01M\ 8/102^{(2016.01)}$
$H01M\ 8/1004^{(2016.01)}$  $H01M\ 8/10^{(2016.01)}$

(52) Cooperative Patent Classification (CPC):
**H01M 8/10; H01M 8/1004; H01M 8/102;
H01M 8/1058; H01M 8/106; H01M 8/1062;
Y02E 60/50**

(86) International application number:
**PCT/KR2023/002062**

(87) International publication number:
**WO 2023/195623 (12.10.2023 Gazette 2023/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **04.04.2022 KR 20220041867**

(71) Applicant: **Kolon Industries, Inc.
Seoul 07793 (KR)**

(72) Inventors:
• **PARK, Jung Hwa**
  **Seoul 07793 (KR)**
• **LEE, Dong-Hoon**
  **Seoul 07793 (KR)**
• **SONG, Kum Suck**
  **Seoul 07793 (KR)**

• **YUN, Sung-Hyun**
  **Seoul 07793 (KR)**
• **YUM, Seung Jib**
  **Seoul 07793 (KR)**
• **OH, Chang Hoon**
  **Seoul 07793 (KR)**
• **LEE, Hye Song**
  **Seoul 07793 (KR)**
• **LEE, Eun Su**
  **Seoul 07793 (KR)**

(74) Representative: **Vossius & Partner
Patentanwälte Rechtsanwälte mbB
Siebertstrasse 3
81675 München (DE)**

(54) **POLYMER ELECTROLYTE MEMBRANE, METHOD FOR MANUFACTURING SAME, AND ELECTROCHEMICAL DEVICE COMPRISING SAME**

(57) The present disclosure relates to a polymer electrolyte membrane, a membrane-electrode assembly comprising same, and an electrochemical device. The polymer electrolyte membrane comprises a porous support and an ion conductor filled in pores of the porous support, wherein the porous support is a polymer electrolyte which is a metal porous support. According to the present disclosure, provided is a polymer electrolyte membrane of which chemical durability and mechanical durability are improved at the same time and which can provide good battery performance.

[Fig. 5]

EP 4 683 012 A1

## Description

### Technical Field

The present disclosure relates to a reinforced composite membrane including a porous support and an ion conductor filled in pores of the porous support, and more particularly, to a polymer electrolyte membrane with improved chemical durability and mechanical durability by comprising a metal porous support made of a metal material used as a metal-based antioxidant, and an electrochemical device comprising the same.

### Background Art

A fuel cell is a cell that directly converts chemical energy generated by the oxidation of fuel into electric energy, and has attracted attention as a next-generation energy source due to its high energy efficiency and environmentally friendly characteristics such as emission of a small amount of pollutant.

The fuel cell generally has a structure in which an anode and a cathode are disposed on both sides, respectively, of an electrolyte membrane with the electrolyte membrane interposed therebetween, and such a structure is called a membrane-electrode assembly (MEA).

Fuel cells may be classified into alkaline electrolyte membrane fuel cells, polymer electrolyte membrane fuel cells (PEMFC), and the like, depending on the type of the electrolyte membrane. Among them, the polymer electrolyte membrane fuel cells have attracted attention as power sources for portable, automotive, and residential applications, due to advantages such as a low operating temperature below 100°C, fast startup and response characteristics, and excellent durability.

A representative example of such a polymer electrolyte membrane fuel cell may include a proton exchange membrane fuel cell (PEMFC) that uses hydrogen gas as fuel, and the like.

The following reaction may occur in the polymer electrolyte membrane fuel cell. First, when fuel such as hydrogen gas is supplied to an anode, hydrogen ions ($H^+$) and electrons ($e^-$) are generated by an oxidation reaction of hydrogen at the anode. The generated hydrogen ions ($H^+$) are transferred to a cathode through a polymer electrolyte membrane, and the generated electrons ($e^-$) are transferred to the cathode through an external circuit. At the cathode, oxygen is supplied, and combines with hydrogen ions ($H^+$) and electrons ($e^-$) to produce water by a reduction reaction of oxygen.

Since the polymer electrolyte membrane is a path through which hydrogen ions ($H^+$) generated at the anode are transferred to the cathode, conductivity of the hydrogen ions ($H^+$) in the polymer electrolyte membrane should be basically excellent. In addition, the polymer electrolyte membrane should have excellent separation capability in separating hydrogen gas supplied to the anode and oxygen supplied to the cathode, and should have excellent mechanical strength, dimensional stability and chemical resistance, and characteristics such as low ohmic loss at a high current density.

Requirements for the polymer electrolyte membrane necessary for operating the polymer electrolyte membrane fuel cell include high hydrogen ion conductivity, chemical stability, low fuel permeability, high mechanical strength, low moisture content, excellent dimensional stability, and the like. Conventional polymer electrolyte membranes tend to have difficulty in normally exhibiting high performance under specific temperature and relative humidity environments, especially under high-temperature/low-humidity conditions. For this reason, the scope of use of polymer electrolyte membrane fuel cells to which the conventional polymer electrolyte membranes are applied has been limited.

The lifespan of the polymer electrolyte membrane is shortened due to electrochemical degradation and physical degradation during operation. A primary cause of the electrochemical degradation is that hydrogen and oxygen cross over to generate radicals on a platinum electrode catalyst.

The radicals formed on the platinum electrode catalyst degrade the polymer electrolyte membrane by reacting with an ion conductor of the polymer electrolyte membrane to cleave ion-conducting polymer chains.

Therefore, there is a need for the development of technology capable of preventing the electrochemical degradation of the polymer electrolyte membrane and improving mechanical durability of the polymer electrolyte membrane.

[Related Art Document]

(Patent Document 1) Korean Patent No. 0699450 (registered on March 28, 2007)
(Patent Document 2) Korean Laid-Open Patent Publication No. 2011-0032298 (published on March 30, 2011)
(Patent Document 3) Korean Patent No. 1093708 (registered on December 15, 2011)

## DISCLOSURE

**Technical Problem**

An object of the present disclosure is to provide a polymer electrolyte membrane capable of improving both mechanical durability and chemical durability.

Another object of the present disclosure is to provide a polymer electrolyte membrane capable of maintaining the performance of a fuel cell including the polymer electrolyte membrane at an equivalent level even though the polymer electrolyte membrane includes a metal porous support.

Another object of the present disclosure is to provide a polymer electrolyte membrane capable of maintaining an anti-oxidation effect for a long period by preventing loss of a metal-based antioxidant and consequently improving the lifespan of a fuel cell.

**Technical Solution**

According to an aspect of the present disclosure, there is provided a polymer electrolyte membrane including a porous support and an ion conductor filled in pores of the porous support, wherein the porous support is a metal porous support.

According to an embodiment of the present disclosure, the metal porous support may be a metal fiber structure sheet or a metal fiber nanoweb made of a metal fiber.

According to an embodiment of the present disclosure, the metal porous support may include at least one selected from the group consisting of Ce, Mn, Cu, Fe, W, Ti, Ir, Pt, and alloys thereof.

According to an embodiment of the present disclosure, the metal fiber may have an average diameter greater than 0.005 $\mu$m to 5 $\mu$m.

According to an embodiment of the present disclosure, the metal fiber structure sheet may have a pore diameter of 0.01 $\mu$m to 30 $\mu$m.

According to an embodiment of the present disclosure, the metal fiber nanoweb may have a basic weight of 1 to 100 g/m$^2$.

According to an embodiment of the present disclosure, the ion conductor may be one or more selected from the group consisting of a hydrocarbon-based ion conductor, a fluorine-based ion conductor, and an anionic ion conductor.

According to an embodiment of the present disclosure, the thickness of the metal porous support may be 15 to 60% based on the entire thickness of the polymer electrolyte membrane.

According to another aspect of the present disclosure, there is provided a membrane-electrode assembly including the polymer electrolyte membrane as described above, wherein the membrane-electrode assembly includes an anode and a cathode located to face each other, and a polymer electrolyte membrane located between the anode and the cathode.

According to another aspect of the present disclosure, there is provided an electrochemical device including the membrane-electrode assembly including the polymer electrolyte membrane as described above.

**Advantageous Effects**

The polymer electrolyte membrane according to the present disclosure uses a metal used for oxidation prevention, fabricated in a mesh form, as a support for a reinforced composite membrane-type polymer electrolyte membrane instead of a metal-based antioxidant, thereby improving both chemical durability and mechanical durability, while also maintaining good cell performance.

The polymer electrolyte membrane according to the present disclosure maintains antioxidant effect for a long period, thereby improving the lifespan of the fuel cell.

The polymer electrolyte membrane according to the present disclosure includes a metal porous support that serves to remove radicals that cause oxidation, thereby having the effect of uniformly dispersing the radical scavenger over the entire surface of the polymer electrolyte membrane, thereby preventing electrochemical degradation over the entire surface of the polymer electrolyte membrane.

**Brief Description of Drawings**

FIG. 1 is a vertical cross-sectional view of a polymer electrolyte membrane according to the present disclosure.

FIG. 2 is a vertical cross-sectional view of a membrane-electrode assembly including a polymer electrolyte membrane according to the present disclosure.

FIG. 3 is a schematic view showing an overall configuration of a fuel cell according to an embodiment of the present disclosure.

FIG. 4 is an enlarged view of a reinforced composite membrane of a polymer electrolyte membrane according to an embodiment of the present disclosure.

FIG. 5 is an enlarged view of a polymer electrolyte membrane according to another embodiment of the present disclosure.

**Best Mode**

Hereinafter, each configuration of the present disclosure will be described in more detail so that a person having ordinary knowledge in the art to which the present disclosure belongs can easily carry out the present disclosure, but this is only one example, and the scope of the rights of the present disclosure is not limited by the following contents.

The term "preferred" or "preferably" as used herein refers to an embodiment of the present disclosure that has a certain advantage under specific conditions. However, other embodiments may also be preferred under the same or different conditions. Furthermore, one or more preferred embodiments do not imply that other embodiments are not useful, nor do they exclude other embodiments falling within the scope of the present disclosure.

The term "includes" as used herein is used to list materials, compositions, devices, and methods useful in the present disclosure and is not intended to be limited to the listed examples.

A polymer electrolyte membrane according to an embodiment of the present disclosure includes a porous support and an ion conductor filled in pores of the porous support, wherein the porous support is a metal porous support.

A polymer electrolyte membrane includes a single membrane formed by casting an ion conductor having ion conductivity in a mold, and a reinforced composite membrane including a composite material prepared by immersing a porous support in a dispersion in which the ion conductor is dispersed.

The reinforced composite membrane includes a porous support and an ion conductor filled in pores of the porous support, thereby improving dimensional stability and physical and mechanical properties, and although the resistance of the polymer electrolyte membrane itself increases to some extent, performance degradation of the fuel cell is prevented, allowing the fuel cell itself to maintain excellent performance and lifespan.

The porous support constituting the reinforced composite membrane is generally made of a polymer material such as the form of a perfluorinated polymer sheet including a plurality of pores due to the microstructure of polymer fibrils or the form of a nanoweb in which nanofibers are integrated in a nonwoven form including a plurality of pores.

As described above, the present disclosure relates to a reinforced composite membrane using a metal porous support instead of a generally used polymer material porous support.

The metal porous support may include one or more selected from the group consisting of Ce, Mn, Cu, Fe, W, Ti, Ir, Pt, and alloys thereof. More preferably, it may include one or more selected from the group consisting of Ce, Ti, and alloys thereof.

The metal constituting the metal porous support may serve to scavenge active radicals generated during operation of the fuel cell, thereby preventing chemical degradation of the electrolyte membrane. By fundamentally functioning as a porous support, it functions as a physical support that improves the mechanical properties and dimensional stability of the polymer electrolyte membrane, while simultaneously serving as an additive such as a radical scavenger.

The metal porous support according to the present disclosure may have the form of a sheet including a plurality of pores formed by a fibril microstructure of a metal material instead of polymer fibrils of a polymer porous support or the form of a nanoweb integrated in a nonwoven form of a metal material including a plurality of pores.

More specifically, the porous support in the form of a sheet including a plurality of pores formed by a fibril microstructure of a metal material may include a plurality of pores by a microstructure formed of nodes interconnected by the fibrils of the metal material.

The microstructure may have any shape, as long as it includes channel-shaped pores in which the ion conductor may form ion clusters. For example, it may have various shapes such as a microstructure including pores in a regular shape such as a grid type, a net type, or a foam type, or in an irregular shape, such as a net type or a coil type.

Meanwhile, the nanoweb may be a nanoweb in which nanofibers are integrated into a non-woven fabric form including a plurality of pores. The nanoweb may be configured as a metal porous support having a similar form to the form of a nonwoven fabric formed by electrospinning, similar to an existing polymer porous support. For example, it may be manufactured by an integration method in which metal nanofibers are softened by heat and integrated to form a nanoweb.

The nanoweb may have a basic weight of 1 $g/m^2$ to 100 $g/m^2$, and preferably 5 to 50 $g/m^2$. Although there is a difference depending on the composition of the metal, when the basic weight of the nanoweb is less than 1 $g/m^2$, visible pores may be formed, making it difficult to function as a porous support. When the basic weight of the nanoweb exceeds 100 $g/m^2$, it may be manufactured in the form of paper or fabric, in which pores are hardly formed.

A porosity of the metal porous support may be 45% or more, and specifically 60% or more. Meanwhile, it is preferable that the porous support has a porosity of 90% or less. When the porosity of the metal porous support exceeds 90%, the shape stability may be reduced, and thus a subsequent process may not be smoothly performed. The porosity may be calculated by the ratio of the air volume to the total volume of the metal porous support according to Equation 1 below.

In this case, the total volume may be calculated by preparing a rectangular sample and measuring its width, length, and thickness. The air volume may be obtained by measuring the mass of the sample and then subtracting the polymer volume calculated inversely from the density, from the total volume.

$$\text{Porosity (\%)} = (\text{air volume in porous support} / \text{total volume of porous support}) \times 100 \qquad \text{[Equation 1]}$$

The polymer electrolyte membrane is a polymer electrolyte membrane in the form of a reinforced composite membrane in which an ion conductor is filled in pores of the metal porous support, and may include a first ion conductor layer located on one surface of the metal porous support and a second ion conductor layer located on the other surface of the metal porous support. The first ion conductor layer and the second ion conductor layer may be formed as the remaining ion conductor, after filling the pores of the metal porous support, forms a thin film on the surface of the metal porous support.

Preferably, the metal porous support according to the present disclosure functions as a radical scavenger by directly reacting with radicals by itself. Thus, the metal porous support may be configured adjacent to an electrode where radicals are formed, or may be configured so that a thickness between the electrode and the metal porous support is much smaller than that of a general polymer electrolyte membrane. However, this is merely one example, and the present disclosure is not limited thereto.

The metal porous support is composed of an aggregate of nanofibers that are three-dimensionally irregularly and discontinuously connected to each other, and accordingly includes a plurality of uniformly distributed pores. The porous support composed of a plurality of pores uniformly distributed has excellent porosity and properties (such as dimensional stability) that can complement the physical properties of the ion conductor.

The diameter of the pores formed in the metal porous support may be in the range of 0.01 to 30 $\mu$m. When the diameter is less than 0.01 $\mu$m, the ion conductivity of the polymer electrolyte may be reduced, and when the diameter exceeds 30 $\mu$m, the mechanical strength of the polymer electrolyte may be reduced.

The metal porous support may be composed of an aggregate of nanofibers in which metal nanofibers are three-dimensionally irregularly and discontinuously connected to each other, and the average diameter of the metal nanofibers may be in the range of greater than 0.005 $\mu$m to 5 $\mu$m. When the average diameter of the metal nanofibers is 0.005 $\mu$m or less, the mechanical strength of the porous support may be reduced, and the pores may collapse easily at high temperatures, resulting in damage to the support. When the average diameter of the metal nanofibers exceeds 5 $\mu$m, it may be difficult to adjust the porosity of the porous support.

The metal porous support may be configured to have a thickness ratio of 15 to 60% based on the entire thickness of the polymer electrolyte membrane. Preferably, it may be configured to have a thickness ratio of 18 to 55%, and most preferably, it may be configured to have a thickness ratio of 20 to 50%.

When the thickness ratio of the metal porous support is lower than the above range, the mechanical strength and shape stability of the polymer electrolyte membrane may be reduced, and the radical scavenger effect may be reduced. When the thickness ratio of the metal porous support is higher than the above range, the ohmic loss of the polymer electrolyte may increase.

Each ion conductor may independently be a cation conductor having a cation exchange group such as a proton, or an anion conductor having an anion exchange group such as a hydroxyl ion, carbonate, or bicarbonate.

The cation exchange group may be any one selected from the group consisting of a sulfonic acid group, a carboxyl group, a boronic acid group, a phosphoric acid group, an imide group, a sulfonimide group, a sulfonamide group, a sulfonic acid fluoride group, and combinations thereof, and may generally be a sulfonic acid group or a carboxylic acid group.

The cation conductor may include a fluorine-based polymer including the cation exchange group and fluorine in a main chain; a hydrocarbon-based polymer such as benzimidazole, polyamide, polyamideimide, polyimide, polyacetal, polyethylene, polypropylene, acrylic resin, polyester, polysulfone, polyether, polyetherimide, polyester, polyethersulfone, polyetherimide, polycarbonate, polystyrene, polyphenylene sulfide, polyetheretherketone, polyetherketone, polyarylethersulfone, polyphosphazene, or polyphenylquinoxaline; partially fluorinated polymers such as a polystyrene-graft-ethylenetetrafluoroethylene copolymer or a polystyrene-graft-polytetrafluoroethylene copolymer; and sulfone imide, etc.

More specifically, when the cation conductor is a hydrogen ion conductor, the polymers may include a cation exchange group selected from the group consisting of a sulfonic acid group, a carboxylic acid group, a phosphoric acid group, a phosphonic acid group, and derivatives thereof in a side chain, and specific examples thereof include, but not limited to, a fluorine-based polymer including poly(perfluorosulfonic acid), poly(perfluorocarboxylic acid), a copolymer of tetrafluoroethylene and fluorovinyl ether including sulfonic acid groups, a defluorinated sulfurized polyether ketone, or a mixture thereof; and a hydrocarbon-based polymer including sulfonated polyimide (S-PI), sulfonated polyarylethersulfone (S-PAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, and a mixture thereof.

The anion conductor is a polymer capable of transporting anions such as hydroxide ions, carbonates, or bicarbonates. The anion conductor is commercially available in the form of hydroxide or halide (generally chlorides), and may be used in industrial water purification, metal separation, or catalytic processes.

As the anion conductor, a polymer doped with metal hydroxide may generally be used. Specifically, poly(ethersulfone), polystyrene, vinyl-based polymers, poly(vinyl chloride), poly(vinylidene fluoride), poly(tetrafluoroethylene), poly(benzimidazole), or poly(ethylene glycol) doped with hydroxide may be used.

Among the ion conductors, fluorine-based polymers may be used. The fluorine-based polymer may be, for example, a perfluorosulfonic acid (PFSA)-based polymer or a perfluorocarboxylic acid (PFCA)-based polymer, but is not limited thereto. As the perfluorosulfonic acid-based polymer, Nafion (Dupont Co., Ltd.) may be used, and as the perfluorocarboxylic acid-based polymer, Flemion (Asahi Glass Co., Ltd.) may be used.

A weight average molecular weight of the ion conductor may be 240 g/mol to 200,000 g/mol, and specifically, 240 g/mol to 10,000 g/mol.

Hereinafter, the present disclosure will be described in more detail based on the drawings.

However, this is merely one example for describing the present disclosure, and the scope of the present disclosure is not limited by the following description.

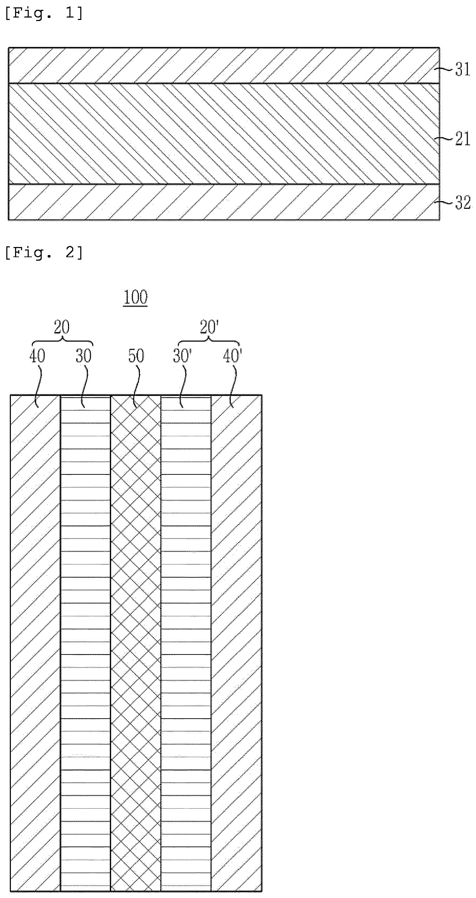

FIG. 1 is a vertical cross-sectional view of a polymer electrolyte membrane according to the present disclosure.

Referring to FIG. 1 showing a vertical cross-section of a polymer electrolyte membrane according to the present disclosure, that is, a reinforced composite membrane comprising a metal porous support 21 including a plurality of pores and an ion conductor (not shown) impregnated into the pores of the metal porous support, the polymer electrolyte membrane may further include ion conductor layers 31 and 32 located on one surface and the other surface, respectively, of the metal porous support impregnated with the ion conductor.

As described above, the ion conductor layers 31 and 32 located on one surface and the other surface of the metal porous support may also be configured such that the ion conductor layer located on the surface of the metal porous support adjacent to the electrode where radicals are generated is formed to be thin, in order to allow the metal porous support to more effectively function as a radical scavenger.

FIG. 2 is a cross-sectional view schematically showing a membrane-electrode assembly including the polymer electrolyte membrane according to the present disclosure. Referring to FIG. 2, a membrane-electrode assembly 100 includes a polymer electrolyte membrane 50 and electrodes 20 and 20' respectively disposed on both surfaces of the polymer electrolyte membrane 50. The electrodes 20 and 20' may include electrode substrates 40 and 40', and catalyst layers 30 and 30' formed on the surfaces of the electrode substrates 40 and 40', and may further include a microporous layer (not shown) located between the electrode substrates 40 and 40' and the catalyst layers 30 and 30' and including conductive fine particles such as carbon powder or carbon black in order to facilitate material diffusion in the electrode substrates 40 and 40'.

In the membrane-electrode assembly 100, the electrode 20 that is disposed on one surface of the polymer electrolyte membrane 50 and causes an oxidation reaction to generate hydrogen ions and electrons from the fuel passed through the electrode substrate 40 to the catalyst layer 30 is referred to as an anode. The electrode 20' that is disposed on the other side of the polymer electrolyte membrane 50 and causes a reduction reaction to generate water from the hydrogen ions supplied through the polymer electrolyte membrane 50 and the oxidant passed through the electrode substrate 40' to the catalyst layer 30' is referred to as a cathode.

As the electrode substrates 40 and 40', a porous conductive substrate may be used so that hydrogen or oxygen may be smoothly supplied. As a representative example thereof, carbon paper, carbon cloth, carbon felt, or metal cloth (that refers to a porous film composed of a metal cloth in a fibrous state or a metal film formed on the surface of a cloth made of polymer fibers) may be used, but the present disclosure is not limited thereto. In addition, it is preferable to use electrode substrates 40 and 40' that have been waterrepellent treated with a fluorine-based resin, as this can prevent a decrease in diffusion efficiency of the reactants due to water generated during operation of the fuel cell. As the fluorine-based resin, polytetrafluoroethylene, polyvinylidene fluoride, polyhexafluoropropylene, polyperfluoroalkyl vinyl ether, polyperfluorosulfonyl fluoride alkoxy vinyl ether, fluorinated ethylene propylene, polychlorotrifluoroethylene, or copolymers thereof may be used.

The fuel cell according to an embodiment of the present disclosure includes the membrane-electrode assembly, and may be, for example, a fuel cell using hydrogen gas as fuel.

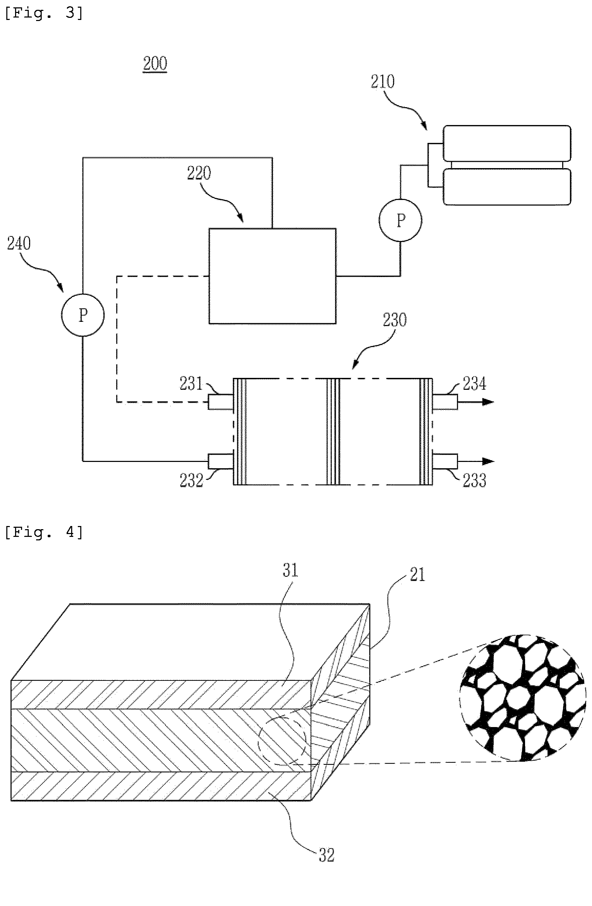

FIG. 3 is a schematic view showing the overall configuration of the fuel cell.

Referring to FIG. 3, the fuel cell 200 includes a fuel supply unit 210 for supplying a mixed fuel of fuel and water, a reforming unit 220 for reforming the mixed fuel to generate a reformed gas containing hydrogen gas, a stack 230 for generating electrical energy by causing an electrochemical reaction between the reformed gas containing hydrogen gas supplied from the reforming unit 220 and an oxidant, and an oxidant supply unit 240 for supplying the oxidant to the reforming unit 220 and the stack 230.

The stack 230 includes a plurality of unit cells for generating electrical energy by inducing oxidation/reduction reactions between a reformed gas containing hydrogen gas supplied from the reforming unit 220 and an oxidant supplied from the oxidant supply unit 240.

Each unit cell refers to a cell unit for generating electricity, and includes a membrane-electrode assembly for oxidizing/reducing oxygen in the reforming gas containing hydrogen gas and the oxidant, and a separator (also referred to as a bipolar plate, hereinafter referred to as a 'separator') for supplying the reformed gas containing hydrogen gas and the oxidant to the membrane-electrode assembly. The separators are disposed on both sides of the membrane-electrode assembly with the membrane-electrolyte membrane interposed therebetween. In this case, the separators respectively located at the outermost sides of the stack are also specifically referred to as end plates.

Among the separators, the end plate includes a first supply pipe 231 in the shape of a pipe for injecting reformed gas containing hydrogen gas supplied from the reforming unit 220, and a second supply pipe 232 in the shape of a pipe for injecting oxygen gas. The other end plate includes a first discharge pipe 233 for discharging reformed gas containing hydrogen gas that is ultimately unreacted and remains, from a plurality of unit cells to the outside, and a second discharge pipe 234 for discharging an oxidizer that is ultimately unreacted and remains, from the unit cells to the outside.

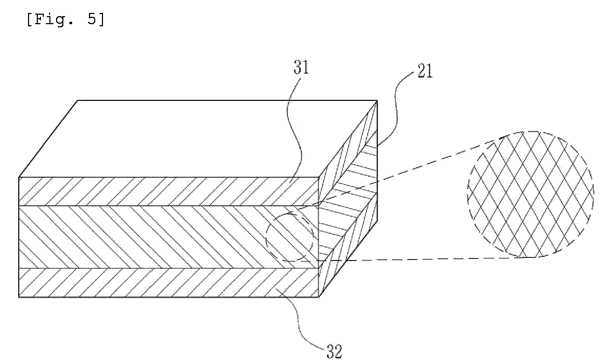

FIG. 4 is an enlarged view of a polymer electrolyte membrane according to an embodiment of the present disclosure. FIG. 5 is an enlarged view of a polymer electrolyte membrane according to another embodiment of the present disclosure.

Referring to FIGS. 4 and 5, a reinforced composite membrane using a metal porous support having a form similar to a metal foam is shown. An ion conductor (not shown) is located in the pores formed by the metal porous support, and the respective pores form interconnected pores in the form of channels. An ion cluster is formed in a state in which the ion conductor is impregnated in the pores of the metal porous support, thereby providing hydrogen ion conductivity.

In this case, the metal porous support servers to scavenge radicals by reacting with radicals generated in the electrode, while also serving as a porous support, thereby providing the polymer electrolyte membrane with excellent durability and dimensional stability as well as excellent chemical durability.

As in the present disclosure, since the metal porous support is located across the entire surface of the polymer electrolyte membrane, it has the same effect as if the radical scavenger is uniformly distributed on the polymer electrolyte membrane, and thus, has the advantage of excellent chemical durability across the entire surface of the polymer electrolyte membrane.

**Mode for Invention**

Hereinafter, the present disclosure will be described in more detail based on Examples, but this is merely an exemplary description for facilitating understanding of the present disclosure, and the scope of the present disclosure is not limited or restricted by the following Examples.

**[Manufacturing Examples]**

<Comparative Example 1> - Electrospun porous support, Nafion reinforced composite membrane

PVP in which a small amount of titanium propoxide and cerium nitrate were mixed, was electrospun under 15 kW conditions to manufacture a PVP polymer porous support.

The porous support was immersed in a 20 wt% Nafion dispersion to manufacture a reinforced composite membrane having a thickness of 20 $\mu$m. The porous support was configured such that ion conductor layers can be naturally formed on one surface and the other surface thereof.

<Comparative Example 2> - Nafion single membrane

A 20 wt% Nafion dispersion was formed into a membrane on a glass substrate to manufacture a single membrane with a thickness of 20 $\mu$m.

<Comparative Example 3> - Hydrocarbon-based ion conductor single membrane

A 15 wt% dispersion of sulfonated polyether sulfone (SPES) dissolved in dimethylacetamide (DMAC) was formed into a membrane on a glass substrate to manufacture a single membrane with a thickness of 20 $\mu$m.

<Example 1>

A polymer electrolyte membrane was manufactured by coating a Ce/Ti mesh layer (metal fiber-spun, diameter: 1 μm, porosity: 70%) with a thickness ratio of 20 at the center, when the thickness of the membrane of Comparative Example 2 was set to 100.

<Example 2>

A polymer electrolyte membrane was manufactured by coating a Ce/Ti mesh layer (metal fiber-spun, diameter: 1 μm inning, porosity: 70%) with a thickness ratio of 33 at the center, when the thickness of the membrane of Comparative Example 2 was set to 100.

<Example 3>

A polymer electrolyte membrane was manufactured by coating a Ce/Ti mesh layer (metal fiber-spun, diameter: 1 μm, porosity: 70%) with a thickness ratio of 50 at the center, when the thickness of the membrane of Comparative Example 2 was set to 100.

<Example 4>

A polymer electrolyte membrane was manufactured by coating a Ce/Ti mesh layer (metal nanoweb, porosity: 70%) with a thickness ratio of 20 at the center, when the thickness of the membrane of Comparative Example 3 was set to 100.

<Example 5>

A polymer electrolyte membrane was manufactured by coating a Ce/Ti mesh layer (metal nanoweb, porosity: 70%) with a thickness ratio of 33 at the center, when the thickness of the membrane of Comparative Example 3 was set to 100.

<Example 6>

A polymer electrolyte membrane was manufactured by coating a Ce/Ti mesh layer (metal nanoweb, porosity: 70%) with a thickness ratio of 50 at the center, when the thickness of the membrane of Comparative Example 3 was set to 100.

<Comparative Example 4>

A polymer electrolyte membrane was manufactured using the same manner as in Example 1, except that a diameter of the metal fibers was 6 μm, compared to the metal fibers of a porous metal support in Example 1.

<Comparative Example 5>

A polymer electrolyte membrane was manufactured using the same manner as in Example 1, except that a diameter of the metal fibers was 0.005 μm, compared to the metal fibers of the porous metal support in Example 1.

[Evaluation Example]

1) Cell performance evaluation:

A membrane-electrode assembly was manufactured and evaluated by forming a cathode and an anode using a Pt/C catalyst according to the decal transfer method, respectively, and then bonding them to a polymer electrolyte membrane. The output performance of the membrane-electrode assembly was evaluated through I-V measurements. Specifically, to confirm the output performance under actual fuel cell operating conditions, the membrane-electrode assembly was secured to a fuel cell unit cell evaluation device, and the temperature was maintained at 65°C. Hydrogen (100% RH) and air (100% RH) were supplied to the anode and cathode in amounts corresponding to stoichiometry of 1.2/2.0, respectively. The current density at 0.6 V was measured, and the higher the result value, the better the output performance.

2) Dimensional stability evaluation:

The polymer electrolyte membrane was dried in a vacuum oven at 80°C for 12 hours, and its dimensions were measured. After immersing it in distilled water at room temperature for 24 hours, its dimensions were measured and dimensional ratios of dimensions before and after water absorption were compared. The lower dimensional change rate, the higher the stability.

3) Chemical durability evaluation:

The evaluation cell was placed in an open circuit voltage (OCV) state, and the cell voltage was measured at regular time intervals to calculate the decrease rate compared to the initial OCV. Measurements were performed using a Scribner 850 fuel cell test system (evaluated under conditions of 90°C, 30% RH, 50 kPa) as a measuring equipment. Specifically, the OCV(V)/initial OCV(V) over time (hr) was measured every 24 hours. When this ratio was 0.8 or less, the evaluation was terminated, and the measurement time was used as the criterion for durability.

Membrane-electrode assemblies were manufactured using the polymer electrolyte membranes of the above Examples and Comparative Examples, and the results of the cell performance evaluation, dimensional stability evaluation, chemical durability evaluation, and cell lifespan measurement are shown in Table 1 below.

[Table 1]

| | Cell performance evaluation (mA/cm$^2$) | Dimensional change (%) | Chemical durability (hr) |
|---|---|---|---|
| Example 1 | 1010 | 2 | 504 |
| Example 2 | 1000 | 0 | 528 |
| Example 3 | 994 | 0 | 528 |
| Example 4 | 1015 | 5 | 456 |
| Example 5 | 1011 | 2 | 480 |
| Example 6 | 1004 | 0 | 480 |
| Comp. Example 1 | 998 | 8 | 432 |
| Comp. Example 2 | 1012 | 12 | 384 |
| Comp. Example 3 | 1020 | 15 | 336 |
| Comp. Example 4 | 978 | 0 | 528 |
| Comp. Example 5 | 1011 | 7 | 480 |

Referring to Table 1, it can be confirmed that the dimensional change and chemical durability were further improved in the Examples using the metal support compared to the reinforced composite membrane of the electrospun support and Nafion (Comparative Example 1), the Nafion single membrane (Comparative Example 2), and the hydrocarbon-based ion conductor single membrane (Comparative Example 3).

In addition, from Table 1, a comparison of Examples 1 to 3 and Examples 4 to 6, it can be confirmed that durability and dimensional stability were improved, but performance was reduced as the thickness ratio of the metal support among the total polymer electrolyte membrane thickness increases. When the thickness of the metal mesh exceeds an appropriate range or the diameter of the metal fibers constituting the metal support is excessively large (Comparative Example 4), durability and dimensional stability may be improved, but there is a problem that cell performance is significantly reduced, making practical implementation difficult. Conversely, when the thickness of the metal mesh is less than an appropriate range or the diameter of the metal wire is excessively small (Comparative Example 5), the effect of the support is significantly reduced.

**Claims**

1. A polymer electrolyte membrane comprising: a porous support and an ion conductor filled in pores of the porous support,
   wherein the porous support is a metal porous support.

2. The polymer electrolyte membrane of claim 1, wherein the metal porous support is a metal fiber structure sheet or a metal fiber nanoweb made of a metal fiber.

3. The polymer electrolyte membrane of claim 1, wherein the metal porous support includes at least one selected from the group consisting of Ce, Mn, Cu, Fe, W, Ti, Ir, Pt, and alloys thereof.

4. The polymer electrolyte membrane of claim 2, wherein the metal fiber has an average diameter greater than 0.005 $\mu$m to 5 $\mu$m.

5. The polymer electrolyte membrane of claim 2, wherein the metal fiber structure sheet has a pore diameter of 0.01 $\mu$m to 30 $\mu$m.

6. The polymer electrolyte membrane of claim 2, wherein the metal fiber nanoweb has a basic weight of 1 to 100 g/m$^2$.

7. The polymer electrolyte membrane of claim 1, wherein the ion conductor is one or more selected from the group consisting of a hydrocarbon-based ion conductor, a fluorine-based ion conductor, and an anionic ion conductor.

8. The polymer electrolyte membrane of claim 1, wherein the thickness of the metal porous support is 15 to 60% based on the entire thickness of the polymer electrolyte membrane.

9. A membrane-electrode assembly comprising the polymer electrolyte membrane of claim 1, comprising:

an anode and a cathode located to face each other, and
a polymer electrolyte membrane located between the anode and the cathode.

10. An electrochemical device comprising a membrane-electrode assembly including the polymer electrolyte membrane of claim 9.

[Fig. 1]

[Fig. 2]

[Fig. 3]

[Fig. 4]

[Fig. 5]

## INTERNATIONAL SEARCH REPORT

| International application No. |
| --- |
| **PCT/KR2023/002062** |

**A.    CLASSIFICATION OF SUBJECT MATTER**

**H01M 8/1062**(2016.01)i; **H01M 8/1058**(2016.01)i; **H01M 8/106**(2016.01)i; **H01M 8/102**(2016.01)i; **H01M 8/1004**(2016.01)i; **H01M 8/10**(2006.01)i

According to International Patent Classification (IPC) or to both national classification and IPC

**B.    FIELDS SEARCHED**

Minimum documentation searched (classification system followed by classification symbols)

H01M 8/1062(2016.01); B01D 69/10(2006.01); C08J 9/28(2006.01); H01B 1/06(2006.01); H01M 4/88(2006.01); H01M 8/02(2006.01); H01M 8/10(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고분자 전해질막(proton exchange membrane), 다공성 지지체(porous support), 공극(pore), 금속 섬유(metal fiber), 이온 전도체(ionic conductor), 연료 전지(fuel battery)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2007-250468 A (NISSAN MOTOR CO., LTD.) 27 September 2007 (2007-09-27)<br>See paragraphs [0011], [0019], [0020], [0026], [0073], [0121], [0131], [0142] and [0145]; and figure 5. | 1-3,5-10 |
| A | | 4 |
| A | KR 10-2001-0092802 A (KOREA INSTITUTE OF SCIENCE AND TECHNOLOGY) 27 October 2001 (2001-10-27)<br>See entire document. | 1-10 |
| A | JP 2004-185882 A (SANYO ELECTRIC CO., LTD.) 02 July 2004 (2004-07-02)<br>See entire document. | 1-10 |
| A | JP 2008-214462 A (HONDA MOTOR CO., LTD.) 18 September 2008 (2008-09-18)<br>See entire document. | 1-10 |

☑ Further documents are listed in the continuation of Box C.      ☑ See patent family annex.

| | |
| --- | --- |
| \* Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **24 May 2023** | **24 May 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/002062** |

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2004-063249 A (SONY CORP.) 26 February 2004 (2004-02-26)<br>See entire document. | 1-10 |

Form PCT/ISA/210 (second sheet) (July 2022)

**INTERNATIONAL SEARCH REPORT**
Information on patent family members

International application No.

**PCT/KR2023/002062**

| Patent document cited in search report | | | Publication date (day/month/year) | Patent family member(s) | | | Publication date (day/month/year) |
|---|---|---|---|---|---|---|---|
| JP | 2007-250468 | A | 27 September 2007 | None | | | |
| KR | 10-2001-0092802 | A | 27 October 2001 | KR | 10-0352562 | B1 | 12 September 2002 |
| JP | 2004-185882 | A | 02 July 2004 | JP | 3883956 | B2 | 21 February 2007 |
| JP | 2008-214462 | A | 18 September 2008 | JP | 5189300 | B2 | 24 April 2013 |
| | | | | US | 2008-0213645 | A1 | 04 September 2008 |
| | | | | US | 8114511 | B2 | 14 February 2012 |
| JP | 2004-063249 | A | 26 February 2004 | None | | | |

Form PCT/ISA/210 (patent family annex) (July 2022)

# EP 4 683 012 A1

**Patent documents cited in the description**

- KR 0699450
- KR 20110032298
- KR 1093708